Europäisches Patentamt

European Patent Office

Office européen des brevets

(19)

(11) Veröffentlichungsnummer: **0 149 035**
**B1**

(12) **EUROPÄISCHE PATENTSCHRIFT**

(45) Veröffentlichungstag der Patentschrift: **25.07.90**

(21) Anmeldenummer: **84112979.4**

(22) Anmeldetag: **27.10.84**

(51) Int. Cl.⁵: **G 03 B 27/32, G 03 B 27/46**

(54) **Fotografisches Rollenkopiergerät.**

(30) Priorität: **04.11.83 DE 3339991**

(43) Veröffentlichungstag der Anmeldung:
**24.07.85 Patentblatt 85/30**

(45) Bekanntmachung des Hinweises auf die
Patenterteilung:
**25.07.90 Patentblatt 90/30**

(84) Benannte Vertragsstaaten:
**CH DE FR IT LI**

(56) Entgegenhaltungen:
**DE-C-1 200 119**
**FR-A-1 555 728**
**FR-A-2 436 415**
**US-A-4 240 744**
**US-A-4 396 281**

**PATENT ABSTRACTS OF JAPAN, Band 6, Nr.
195 (P-146)1073r, 5. Oktober 1982; & JP-A-57
104 921 (COPAL K.K.) 30-06-1982**

(73) Patentinhaber: **Agfa-Gevaert AG**
**D-5090 Leverkusen 1 (DE)**

(72) Erfinder: **Nitsch, Wilhelm, Dr.**
**Werdenfelsstrasse 39**
**D-8000 München 70 (DE)**
Erfinder: **Benker, Gerhard**
**Haydnstrasse 1**
**D-8023 Pullach (DE)**

(56) References cited:
**PATENT ABSTRACTS OF JAPAN, Band 7, Nr. 60
(P-182)1205r, 12. März 1983; & JP-A-57 207 236
(KONISHIROKU SHASHIN KOGYO K.K.) 18-12-
1982**

**Firmendruckschrift "Multi Scanning Printer:
AGFA MSP"**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 149 035 B1

## Beschreibung

Die Erfindung betrifft ein Rollenkopiergerät nach dem Oberbegriff des Anspruchs 1.

Derartige, universell einsetzbare Rollenkopiergeräte sind verschiedentlich auf den Markt gebracht worden. In der Regel ist beim Einstellen eines solchen Kopiergerätes bekannt, welches Negativformat auf welches Positivformat zu kopieren ist. Dadurch sind bekannt die Papierbreite, die Abmessungen des Negativs für die fotoelektrische Abtastung und die Abmessungen des Spiegelschachtes zur optimalen Ausleuchtung der Kopiervorlage. Ferner ergeben sich aus diesen Daten die einzustellende Papierformatlänge und der Abbildungsmaßstab eines Objektivs, unabhängig davon, ob es sich um ein Objektiv mit variabler Brennweite oder um ein starres Objektiv mit veränderlichem Abstand zur Vorlage handelt, demzufolge auch der Abstand zur Papierebene verändert werden muß. Bei einfachen Geräten dieser Art ist zur Formateinstellung eine Fülle von Einstellvorgängen von Hand vorzunehmen, was immer das Risiko eines Bedienungsfehlers in sich birgt, der noch dazu im abgedunkelten Teil des Gerätes passiert sein kann, der im Betrieb nicht überprüft werden kann.

Es sind auch schon verschiedentlich Geräte bekanntgeworden, bei denen derartige Umstellvorgänge z. T. automatisiert werden. Zum Beispiel ist aus der deutschen Patentschrift 17 97 492 ein Kopiergerät bekannt, bei dem durch das Einsetzen einer Negativmaske über geeignete Verstärkungsglieder die motorische Verstellung der Beleuchtungsintensität, der Negativgrößenkompensation, der Maske des Kopierpapiers und die Papierlängenverstellung gesteuert werden. Diese Bauweise mit motorischen Stellgliedern ist jedoch äußerst aufwendig. Eine derartige Bauweise erlaubt es nicht, die oft kostengünstigere Methode des Austauschens verhältnismäßig einfacher Teile zur Anpassung an unterschiedliche Formate vorzunehmen.

Aufgabe der Erfindung ist es deshalb, ein Kopiergerät der eingangs genannten Art mit vertretbarem Bauaufwand so zu gestalten, daß Bedienungsfehler in diesem Bereich praktisch ausgeschlossen sind.

Diese Aufgabe wird gelöst durch die im Anspruch 1 beschriebene Erfindung.

Durch Aufteilung der Einstellvorgänge in solche, die durch Austauschen von Teilen oder Verschieben von Hand verhältnismäßig einfach vorgenommen werden können und solche, bei denen eine kontinuierliche, motorische verstellung sinnvoll erscheint, wird für jeden dieser Einstellvorgänge ein Kostenoptimum erreicht. Durch die Rückmeldung des Zustandes der von Hand veränderten Einstellgrößen wird jedoch die Überwachung durch einen Rechner möglich, der die Einstellung der motorisch veränderbaren Glieder erst dann vornimmt, wenn die anderen Einstelleinrichtungen in zueinander verträgliche Positionen bzw. Zustände gebracht sind. Als Umstellen wird im folgenden auch ein Vorgang bezeichnet, bei dem ein Bauteil durch ein Bauteil gleicher Funktion, jedoch für eine andere Materialabmessung ersetzt wird.

Weitere Einzelheiten und vorteile der Erfindung ergeben sich aus den Unteransprüchen im Zusammenhang mit der Beschreibung eines Ausführungsbeispiels, das anhand von Figuren eingehend erläutert ist. Es zeigen:

Fig. 1 ein Blockschaltbild der Steuerung eines Rollenkopiergerätes zum Kopieren unterschiedlich breiter Filme auf unterschiedlich breite Kopiermaterialien,

Fig. 2 ein Flußdiagramm eines Umstellvorgangs des Gerätes gemäß Fig. 1.

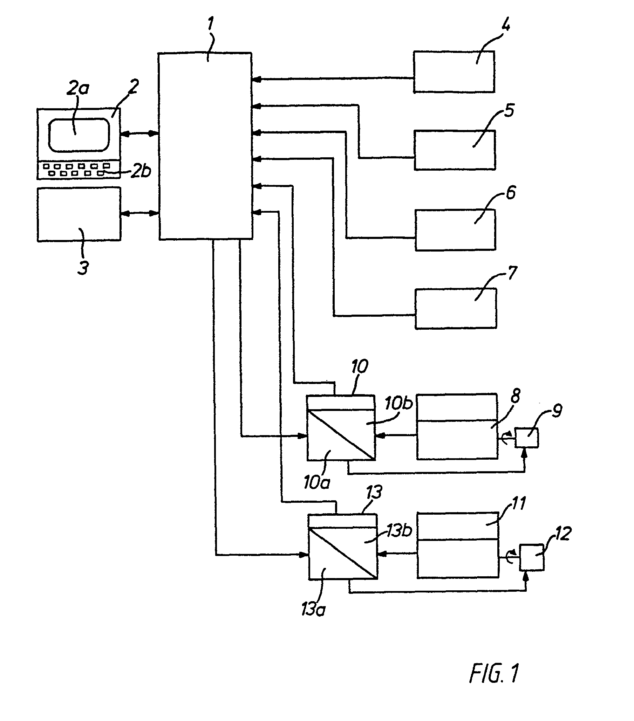

In Fig. 1 ist mit 1 ein Rechner bezeichnet, der als Mikroprozessor mit eingebauten Speichereinrichtungen ausgebildet ist. An dieser Stelle kann z. B. ein Prozessor der Firma Intel mit der Bezeichnung 8085 vorgesehen sein. An diesen Rechner 1 ist zunächst ein Terminal 2 angeschlossen mit Bildschirm 2a und Tastenfeld 2b zur Auslösung von Steuervorgängen. Ferner ist an den Rechner angeschlossen eine externe Speichereinrichtung 3 mit einem Laufwerk für eine Magnetscheibe. Dieser Speicher dient zur Aufnahme von Formatparametern.

Auf der anderen Seite sind an den Rechner 1 die Leitungen von Fühlern zur Rückmeldung des Zustandes von verschiedenen einstellbaren Einrichtungen an einem Rollenkopiergerät bekannter Bauart angeschlossen.

Die erste einstellbare Einrichtung 4 ist eine Filmführungsplatte für Filme bestimmter Breite, die in Zuordnung zu der Filmlaufbahn quer zu dieser einen Schlitz aufweist, durch den hindurch der Film bereichsweise auf seine Durchlässigkeit abgetastet werden kann. Eine solche Abtasteinrichtung ist in der Anmeldung der Anmelderin (DE-A-3 339 958) ausführlich beschrieben. Die geschlitzte Filmführungsplatte ist jeweils nach der Breite des zu kopierenden Films auszuwechseln. Die platte trägt an ihrer Unterseite Vorsprünge, die durch entsprechende Fühler erkannt werden, so daß am Rechner 1 jeweils eine Information darüber vorliegt, für welche Filmbreite die im Gerät eingesetzte Platte geeignet ist.

Die umstellbare Einrichtung 5 ist in der Kopierstation des Kopiergerätes die sogenannte Negativmaske, die je nach Filmformat 135, 24 × 36 mm, 24 × 24 mm oder 18 × 24 mm, Filmformat 126 oder Filmformat 110 angepaßt ist. Diese Masken sind als ganze Platten mit geeignetem Durchbruch auswechselbar und tragen ebenfalls an ihrer Unterseite Codierungen, die durch geeignete Fühler im Kopiergerät ein Signal an den Rechner liefern über das eingestellte Negativformat. Eine solche Vorlagenbühne mit auswechselbaren Formatmasken ist z. B. ausführlich beschrieben in der deutschen Patentschrift 26 59 449 der Anmelderin.

In Rollenkopiergeräten besteht ein starkes Interesse daran, das im Lampenhaus vorhande Licht auch voll für den Kopierzweck zu nutzen. Das Mischglied zwischen dem Ausgang des Lampenhauses und der Negativbühne ist deshalb zweckmäßigerweise in der Austrittsfläche an das jeweilige Negativformat angepaßt. Hierzu ist es bekanntgeworden, verschiedene Spiegelschächte unterschiedlichen Austrittsquerschnittes gegeneinander austauschbar im Gerät vorzusehen. Nach einer anderen Ausgestaltung solcher Spiegelschächte, die in der deutschen Patentschrift 24 51 892 ausführlich beschrieben ist, sind derartige Spiegelschächte ineinandergeschachtelt, so daß durch eine einfache Verschiebebewegung drei verschiedene Schächte realisierbar sind. Auch hier kann durch geeignet angeordnete Fühler ein Signal erzeugt werden, das anzeigt, für welches Filmformat der Spiegelschacht gerade eingestellt ist. Die Geber des Signals für den Spiegelschacht sind in Fig. 1 mit dem Bezugszeichen 6 versehen.

Eine weitere wichtige Einstellgröße ist die Papierbreite. Nach einer Anmeldung der Anmelderin (DE-C-3 339 617) ist zur Einstellung der Papierbreite auf einer Führung frei verschiebbar ein Lochmarkierer angeordnet, der fest verbunden ist mit Seitenführungsflächen für das Kopiermaterial. Durch entsprechende Markierungen im Gestell kann diese Einheit von Markierer und Seitenführung für eine bestimmte Papierbreite in die richtige Position gebracht werden. In dieser Stellung werden diese Führungs- und Markiereinheiten verriegelt durch ein von oben aufgesetztes, linealförmiges Maskenband, das entsprechende Fixierbohrungen aufweist und andererseits im Gestell des Kopiergerätes fixiert ist. Diese linealförmigen Papiermasken sind austauschbar und ebenfalls mit Codierstiften versehen, die von gestellfesten Fühlern abzutasten sind. Diese Fühlergruppe ist in Fig. 1 mit dem Bezugszeichen 7 versehen.

Die bisher aufgeführten umstellbaren Einrichtungen 4 bis 7 sind jeweils durch Verschiebung oder Austausch von Teilen von Hand in einen geänderten Zustand zu bringen.

Weiterhin sind an dem Rechner 1 zwei Umstelleinrichtungen angeschlossen, die mit Motorsteuerungen versehen sind. Dies ist einmal die Bildlängenverstellung 8, die mit einem Motor 9 versehen ist. Einzelheiten dieser Einstelleinrichtung sind ebenfalls der DE-C-3 339 617 zu entnehmen. Der Motor 9 ist gesteuert durch einen Subrechner 10, der einerseits vom Rechner direkt im Teil 10a den Sollwert vorgegeben bekommt, andererseits z. B. durch Abtastung einer Schlitzscheibe auf der Einstellspindel mit dem Teil 10b den Istwert verfolgt. Die beiden Rechnerteile 10a, 10b und der Motor sind eine Steuereinrichtung mit ständigem Soll-/Istwertvergleich. In dem Rechner 1 ist außerdem der jeweils vorgegebene Sollwert bekannt, so daß damit die nach Abschluß des Einstellvorgangs erreichte Bildlängeneinstellung bekannt ist.

Schließlich ist an den Rechner 1 auch angeschlossen die Steuerung für ein Objektiv variabler Brennweite 11, dessen Glieder ebenfalls durch Motore 12 gegeneinander und gegenüber der Vorlage verschiebbar sind, so daß jeweils der erforderliche Abbildungsmaßstab eingestellt werden kann. Einzelheiten einer solchen Varioobjektivsteuerung sind aus der EP-B-0 142 743 Anmelderin bekannt. Auch zur Steuerung des Motors 12 ist ein Teilrechner 13 vorgesehen, in dem ein Teil 13a vom Rechner 1 den Sollwert mitgeteilt bekommt, während der Teilrechner 13b den tatsächlich erreichten Istwert vergleicht und durch ständigen Soll- Istvergleich die Nachführung des Motors 12 bewirkt.

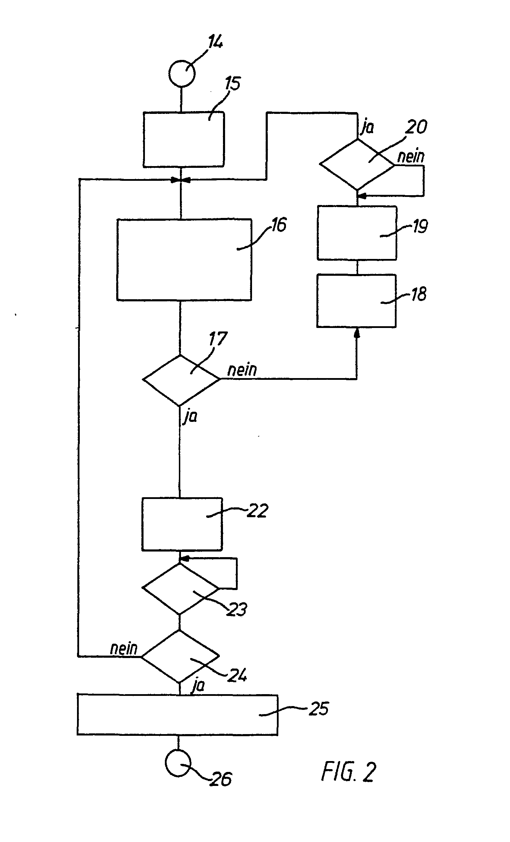

Die Wirkungsweise der Formatumstellung ergibt sich aus einem Flußdiagramm gemäß Figur 2.

Der Startpunkt 14 wird erreicht durch Betätigung entsprechender Tasten in der Tastatur 2b des Terminals 2. Danach wird auf dem Bildschirm 2a gemäß Kästchen 15 eine Maske für die Verfolgung des Einstellvorgangs aufgebaut. Im weiteren Verlauf wird gemäß Kasten 16 die Abfrage der jeweiligen Einstellwerte vorgenommen, wobei zunächst die Scannerplatte 4, die Negativmaske 5, die Spiegelschachtstellung 6 und die Papierbreiteneinstellung 7 angezeigt sind. Gemäß Abfrage 17 überprüft der Rechner 1, ob diese vier von Hand einzustellenden Werte innerhalb einer Gerätekonfiguration sinnvoll sind, d. h. beim Kopieren eines bekannten Filmformates auf eine bekannte Papierbreite vorkommen können. Um diese Überprüfung zu ermöglichen, sind auf der Magnetspeicherscheibe 3 alle bei Kombination der bekannten Formate auftretenden Konfigurationen aufgezeichnet, und es wird durch den Rechner 1 schrittweise abgefragt, ob die im Kasten 16 angezeigte Konfiguration gemäß Speicher eine der praktikablen ist. Wird dies verneint, so wird der Zweig nach rechts zum Kasten 18 verfolgt, wo die Anzeige eines Fehlertextes erfolgt. Dabei ist die Priorität im Rechner so gesetzt, daß die Einstellung der Negativmaske 5 auf jeden Fall für richtig angesehen wird, weil der Bediener in der Regel das zu bearbeitende Filmformat vorliegen hat und genau weiß, welche Maske er dafür einzusetzen hat. Im Kasten 18 werden deshalb die einstellbaren Einrichtungen angezeigt, die mit der tatsächlich im Gerät vorhandenen Negativmaske 5 nicht verträglich sind.

Gemäß dem folgenden Kasten 19 wird nach Anzeige des Fehlertextes für eine gewisse Zeit, z.B. eine Sekunde, gewartet, so daß der Bediener Gelegenheit hat, die als fehlerhaft angezeigte Einstellung, z. B. durch Einsetzen eines anderen Spiegelschachtes zu korrigieren. Das Entscheidungsfeld 20 dient nur als Warteschleife für die Verzögerung gemäß Kasten 19. Nach Ablauf der Verzögerung geht die Überprüfung zurück an den Kasten 16 und die Entscheidungsstelle 17, wo sich zeigt, ob zwischenzeitlich die Konfiguration so korrigiert wurde, daß sie verträglich erscheint oder ob noch immer ein Fehler vorliegt. Eventuell noch verbliebene Fehler werden dann im Kasten 18 angezeigt.

Sind keine Fehler mehr vorhanden, werden sämtliche weiteren Einstellwerte in der Maske gemäß Kasten 16 unter Kasten 18 eingetragen bzw. das Display gemäß Kasten 16 wird ergänzt um die Zeilen für die Bildlänge und den Abbildungsmaßstab. Diese Einstellwerte ergeben sich für die Kombination von Negativformat und Papierbreite unmittelbar aus dem externen Speicher 3.

Der Bediener hat dann gemäß Kasten 22 Gelegenheit zur Überprüfung, ob die angezeigten Formatangaben mit seinen Absichten übereinstimmen. Die Eingabetastatur 2b des Terminals wird dann gemäß Raute 23 zur Freigabe bereitgemacht. Ist der Bediener mit den nunmehr angezeigten Einstellwerten einverstanden, gibt er "Ja" ein und nunmehr erst erfolgt die Einstellung der Papierlänge 8 und die Einstellung des Varioobjektivs 11 entsprechend den vom Rechner vorgegebenen Sollwerten im Kasten 25. Gleichzeitig wird die angezeigte Konfiguration in den Rechner übernommen für ständige Routineüberprüfungen.

Mit dem Erreichen des Punktes 26 ist der Einstellvorgang beendet.

Gibt jedoch der Bediener an der Stelle 24 ein "Nein" ein, so springt das Programm zurück auf die Anfangsposition, wo die fest veränderten Einstelleinrichtungen 4 bis 7 angezeigt werden, während ja die Einstellung der Positivlänge und des Objektivs 11 noch nicht erfolgt sind. Der Bediener hat dann die Möglichkeit, z. B. durch Austausch der Negativmaske 6 oder der Papierbreitenmaske 7 eine andere Konfiguration zu beginnen. Dies kann zwar zur Folge haben, daß andere Einstellparameter nicht zu dieser Negativmaske passen; der Bediener hat dann entsprechend der Anzeige im Kasten 18 weitere Änderungen vorzunehmen.

Schließlich ist der Rechner so programmiert, daß mit Abschluß des Einstellvorgangs des Objektivs 11 und der Formatlänge 8 der Anlauf des Kopiervorgangs freigegeben wird.

Es können auch andere umstellbare Einrichtungen in das System einbezogen werden, z. B. Eintrittsmundstücke für das Papierband am Ausgang der Rollenkassetten.

## Patentansprüche

1. Fotografisches Rollenkopiergerät zum Kopieren von Filmen unterschiedlicher Breite auf Kopiermaterialbänder ebenfalls unterschiedlicher Breite mit an die unterschiedlichen Breiten durch Verschieben oder Austausch von Teilen anpaßbaren Führungsanordnungen, mit veränderbarer Bildlängenbegrenzung und einstellbarem Objektiv, dadurch gekennzeichnet, daß die Einrichtungen zur Formatumstellung zum Teil (4, 5, 6, 7) durch Austausch oder Verschiebung von Hand umstellbar sind und abtastbare Marken zur Weiterleitung eines Signals für den jeweiligen Zustand an einen Rechner (1) mit einem Speicher (3) für verträgliche Kombinationen der Einstellwerte für die von Hand einstellbaren Einrichtungen (4, 5, 6, 7) aufweisen und die restlichen umstellbaren Einrichtungen (8, 11) durch Befehl des Rechners gesteuert motorisch in eine Sollposition fahrbar sind, daß nach Umstellung der von Hand umstellbaren Einrichtungen der Rechner (1) die Verträglichkeit der von Hand eingestellten Einrichtungen überprüft und bei Verträglichkeit die restlichen Einrichtungen auf die sich aus den eingestellten Werten ergebenden Sollpositionen steuert und ein Freigabesignal setzt und daß der Rechner bei Nichtverträglichkeit ein entsprechendes Warnsignal gibt.

2. Rollenkopiergerät nach Anspruch 1, dadurch gekennzeichnet, daß als motorisch umstellbare Einrichtungen eine in Bandlängsrichtung verschiebbare Bildlängenbegrenzungsmaske (8) und ein Varioobjektiv (11) mit zwei in Achsenrichtung verschiebbaren Gliedern vorgesehen sind.

3. Rollenkopiergerät nach einem der vorangehenden Ansprüche, dadurch gekennzeichnet, daß der Rechner (1) bei Nichtverträglichkeit die Negativmaskenplatte (5) als richtig eingesetzt annimmt und die damit unverträglichen Einrichtungen anzeigt.

4. Rollenkopiergerät nach einem der vorangehenden Ansprüche, dadurch gekennzeichnet, daß der Rechner nach Feststellen der Verträglichkeit der von Hand eingestellten Einrichtungen (4, 5, 6, 7) die sich ergebenden Einstellwerte für die restlichen Einrichtungen (8, 11) zunächst nur anzeigt und den Einstellvorgang erst nach einer Freigabe durch den Bediener veranlaßt.

5. Rollenkopiergerät nach einem der vorangehenden Ansprüche, dadurch gekennzeichnet, daß der Abschluß des Einstellvorgangs der motorisch umstellbaren Einrichtungen (8, 11) den Anlauf des Kopiervorgangs freigibt.

## Revendications

1. Tireuse de pellicule photographique en bobine pour faire des tirages de pellicules de différentes largeurs sur des bandes de support de tirage de différentes largeurs également, comportant des mécanismes de guidage qui peuvent s'adapter aux différentes largeurs par coulissement ou échanges de pièces. ainsi qu'une limitation, modifiable, de la longueur de l'image et qu'un objectif réglable, caractérisée en ce que les dispositifs prévus pour la modification du format peuvent, en partie (4, 5, 6, 7) être modifiés par échange ou coulissement à la main et présentent des repères, qui peuvent être détectés, pour conduire un signal correspondant à l'état respectif à un ordinateur (1) comportant une mémoire (3) pour les combinaisons compatibles de valeurs de réglage pour les dispositifs (4, 5, 6) réglables à la main; et en ce que les autres dispositifs modifiables (8, 11) peuvent être amenés dans une position prescrite, par voie motorisée, sur commande d'une instruction de l'ordinateur; et en ce qu'après modification des dispositifs modifiables à la main, l'ordinateur (1) vérifie la compatibilité des dispositifs réglés à la main et, en cas de compatibilité, donne aux autres dispositifs instruction de prendre des positions prescrites résultant des valeurs ainsi réglées et envoie un signal de libération; et en ce qu'en cas de non compatibilité, l'ordinateur envoie un signal d'avertissement approprié.

2. Tireuse de pellicule en bobine selon la revendication 1, caractérisée en ce que, comme dispositifs modifiables par voie motorisée, sont prévus un masque (8) de limitation de la longueur de l'image, qui peut coulisser dans la direction longitudinale de l'image, ainsi qu'un objectif variable (11) présentant deux organes qui peuvent coulisser dans la direction axiale.

3. Tireuse de pellicule photographique selon l'une des revendications précédentes, caractérisée en ce qu'en cas de non compatibilité, l'ordinateur (1) admet que la plaque (5) de masquage du négatif a été correctement introduite et qu'il indique les dispositifs incompatibles avec elle.

4. Tireuse de pellicule en bobine selon l'une des revendications précédentes, caractérisée en ce qu'après avoir déterminé la compatibilité des dispositifs (4, 5, 6, 7) réglés à la main, l'ordinateur ne fait tout d'abord qu'indiquer les valeurs de réglage qui en résultent pour les autres dispositifs (8, 11) et ne démarre le processus de réglage qu'après libération par l'opérateur.

5. Tireuse de pellicule en bobine selon l'une des revendications précédentes caractérisée en ce que l'achèvement du processus de réglage des dispositifs (8, 11) réglables par voie motorisée libère le démarrage du processus de tirage.

**Claims**

1. A photographic roller-type copying machine for copying films of different width onto webs of copying material of likewise different width comprising guide arrangements adaptable to the different widths by shifting or by exchanging parts, variable image length limiting means and a variable lens, characterized in that part (4, 5, 6, 7) of the format-changing devices are manually reversible by exchange or shifting and comprise scannable marks for relaying a signal for the particular state to a computer (1) comprising a memory (3) for compatible combinations of the positioning values for the manually adjustable devices (4, 5, 6, 7) and the remaining reversible devices (8, 11) are designed to be moved into a set position by a motor under the control of the computer; in that, after the manually reversible devices have been reversed, the computer (1) checks the manually positioned devices for compatibility and, in the event of compatibility, moves the remaining devices into the set positions arising out of the adjusted values and sets a release signal; and in that, in the event of non-compatibility, the computer releases a corresponding warning signal.

2. A roller-type copying machine as claimed in claim 1, characterized in that an image length limiting mask (8) displaceable longitudinally of the web and a variable lens (11) with axially displaceable elements are provided as the motor-reversible means.

3. A roller-type copying machine as claimed in any of the preceding claims, characterized in that, in the event of non-compatibility, the computer (1) assumes the negative mask plate (5) to be correctly used and indicates the devices incompatible therewith.

4. A roller-type copying machine as claimed in any of the preceding claims, characterized in that, after establishing the compatibility of the manually positioned devices (4, 5, 6, 7), the computer at first merely indicates the ensuing positioning values for the remaining devices (8, 11) and only initiates the positioning process after release by the operator.

5. A roller-type copying machine as claimed in any of the preceding claims, characterized in that the completion of the positioning process of the motor-reversible devices (8, 11) releases the start-up of the copying process.

FIG. 1

1

FIG. 2